# EUROPÄISCHE PATENTANMELDUNG

(11) **EP 0 994 008 A2**
(43) Veröffentlichungstag der Anmeldung: **19.04.2000**
(21) Anmeldenummer: 99116897.2
(22) Anmeldetag: 07.09.1999
(51) Int. Cl.: B62D 29/04, B62D 25/10, B62D 29/00

(54) **Karosseriebauteil**

(30) Priorität: 15.10.1998 DE 19847612
(71) Anmelder: Volkswagen Aktiengesellschaft, 38436 Wolfsburg (DE)
(72) Erfinder: Dau, Wolfram, 38444 Wolfsburg (DE)

(57) **Zusammenfassung**

Ein Karosseriebauteil (1) weist einen formstabilen, im wesentlichen die Kontur des Karosseriebauteils (1) bestimmenden Grundkörper (2) auf. Es ist eine den Grundkörper (2) umgebende Ummantelung (3) aus einem Kunststoff oder einem Verbundwerkstoff vorgesehen, die eine dem Grundkörper (2) abgewandte, im wesentlichen ebene Manteloberfläche (4) aufweist, an der eine Karosserrieaußenhaut (5a, 5b) angebracht ist. Das Karosseriebauteil (1) besitzt ein geringes Gewicht, eine hohe Steifigkeit und ist kostengünstig in der Herstellung.

## Beschreibung

Die vorliegende Erfindung betrifft ein Karosseriebauteil mit einem formstabilen, im wesentlichen die Kontur des Karosseriebauteils bestimmenden Grundkörper.

Ein Karosseriebauteil der eingangs genannten Art ist beispielsweise durch die DE-OS 16 55 650 bekanntgeworden.

Dieses Karosseriebauteil ist aus Kunststoff gefertigt und zeigt, daß im Karosseriebau immer mehr Kunststoffbauteile eingesetzt werden. Bei der Verwendung von Karosseriebauteilen aus Kunststoff ist darauf zu achten, daß die Karosseriebauteile aus Kunststoff den nachfolgenden Anforderungen genügen:
- geringes Gewicht;
- hohe Steifigkeit;
- kostengünstige Herstellung.

Darüber hinaus soll es auch möglich sein, daß die Karosseriebauteile aus Kunststoff ein Oberflächenfinish erhalten können, daß eine Optik erreichbar wird, wie sie von Metalloberflächen bekannt ist.

Der vorliegenden Erfindung liegt die Aufgabe zugrunde, ein Karosseriebauteil zu schaffen, das den vorgenannten Anforderungen genügt.

Diese Aufgabe wird erfindungsgemäß durch ein Karosseriebauteil gelöst, bei dem eine den Grundkörper umgebende Ummantelung aus einem Kunststoff oder einem Verbundwerkstoff vorgesehen ist, die eine dem Grundkörper abgewandte, im wesentlichen ebene Manteloberfläche aufweist, an der eine Karosserieaußenhaut angebracht ist.

Das Karosseriebauteil kann entweder ein komplettes Kfz-Bauteil sein, wie beispielsweise eine Tür, ein Kotflügel oder ein Fahrzeugdach, oder aber auch nur ein Abschnitt dieses kompletten Fahrzeugteils sein. Ebenso wäre es möglich, eine gesamte einteilige Fahrzeugkarosserie durch den erfindungsgemäßen Aufbau des Karosseriebauteils zu gestalten.

Das erfindungsgemäße Karosseriebauteil weist eine dreiteilige Schichtstruktur aus einem Materialverbund auf, der eine höhere Steifigkeit gegenüber herkömmlichen Karosseriebauteilen besitzt, bei denen Kunststoffe verwendet werden. Das erfindungsgemäße Karosseriebauteil ist dennoch kostengünstiger zu fertigen als beispielsweise selbsttragende oder vergleichbare space-frame-Karosserien. Besonders vorteilhaft ist es, daß die Manteloberfläche der Ummantelung des Grundkörpers eine ebene Unterhaut ausbildet, an der eine auf ein spezielles Karosseriebauteil abgestimmte Außenhaut aufziehbar ist. Beispielsweise kann für den Innenbereich der Karosserie eine weiche Außenhaut und für den Außenbereich der Karosserie eine möglichst harte Außenhaut vorgesehen sein. Das Zusammenwirken der ebenen Manteloberfläche der Ummantelung (Unterhaut) und der auf dieser aufgebrachten Außenhaut führt dazu, daß eine hohe Oberflächengüte für eine spätere Lackierung erreicht werden kann.

Spezielle Ausführungsformen weisen Ummantelungen auf, die aus einem geschäumten Kunststoff oder aus einem metallischen Schaumwerkstoff herstellbar sind. Derartige Ummantelungen bilden eine in das Karosseriebauteil integrierte Polsterung oder Karosserieverkleidung aus. Zusätzlich wird durch die Schaumwerkstoffe mit einem feinporösen Struktur eine Geräuschdämmung des Karosserieinnenraums gegenüber Motorgeräuschen oder anderen Außengeräuschen, die beim Betrieb des Kraftfahrzeugs entstehen können, ermöglicht.

Neben den vorgenannten Werkstoffen zur Herstellung der Ummantelung des Grundkörpers können auch andere Materialien herangezogen werden, wie beispielsweise Polyethylen. Durch dieses Material läßt sich eine dünnwandige nicht auftragende Ummantelung des Grundkörpers herstellen, die eine glatte Manteloberfläche (Unterhaut) ausbilden kann.

Auf die Endmontage der Karosserie beziehungsweise des gesamten Kraftfahrzeugs wirkt es sich vorteilhaft aus, wenn in der Ummantelung des Grundkörpers Kabelkanäle vorgesehen sind. Das Karosseriebauteil weist dann bereits nach seiner Herstellung von Anfang an Kabelkanäle auf, die bei der Endmontage der Karosserie der Karosserie beziehungsweise des Kraftfahrzeugs vorhanden sind, weil sie gleichzeitig bei der Fertigung des Karosseriebauteils an sich von Anfang an vorhanden sind. Eine nachträgliche Umgestaltung oder Nachbearbeitung des Karosseriebauteils kann entfallen.

Aus dem gleichen Grund lassen sich in die Ummantelung auch Halterungen für kleinere Bauteile einbetten. Daher existieren nach der Fertigung des Karosseriebauteils bereits entsprechende Verbindungsstellen, die bei der Endmontage der Karosserie oder des Kraftfahrzeugs genutzt werden können. Die Endmontage kann dadurch beschleunigt durchgeführt werden.

Bei einer weiteren Ausführungsform ist die Karosserieaußenhaut durch eine Folie aus Kunststoff oder Metall ausgebildet. Das Karosseriebauteil erhält dadurch eine dünnwandige,
leichte, filmartige Außenhaut, die widerstandsfähig gegen UV-Strahlung ist. Eine Materialschicht der Außenhaut aus Metall kann zu einer weiteren Steifigkeitserhöhung des Karosseriebauteils führen.

Die Karosserieaußenhaut kann auf unterschiedlichste Art und Weise an der Manteloberfläche (Unterhaut) angebracht werden. Eine schnelle und gleichmäßige Verbindung der Karosserieaußenhaut mit der Manteloberfläche ist erreichbar, wenn die Karosserieaußenhaut auf der Manteloberfläche aufgeklebt wird. Alternativ ist die Karosserieaußenhaut auch mit Hilfe eines oder mehrerer Befestigungsmittel mit dem Grundkörper fest verbindbar. Der formstabile Grundkörper des Karosseriebauteils dient sozusagen als innere Befestigungsplatte oder Befestigungsschicht, an der die weiteren Elemente des Karosseriebauteils angekoppelt werden können.

Mit Hilfe des starren Grundkörpers kann ein Karosseriebauteil mit einem weiteren Karosseriebauteil oder anderen Karosserieanbauteilen verbunden werden, um die gesamte Karosserie auszubilden. Mindestens ein Karosseriebauteil ist an dem erfindungsgemäßen Karosseriebauteil befestigbar, indem das mindestens eine weitere Karosserieanteil mit Hilfe eines oder mehrerer Befestigungsmittel mit dem Grundkörper fest verbindbar ist.

Auch für die Ausbildung der Befestigungsmittel zur Anbringung von Karosseriekomponenten an dem Grundkörper des erfindungsgemäßen Karosseriebauteils stehen unterschiedliche Gestaltungsmöglichkeiten zur Verfügung. Beispielsweise kann das Befestigungsmittel durch eine selbstschneidende Befestigungsschraube ausgebildet sein. Es ist aber auch denkbar, als Befestigungsmittel einen Stanzniet zu verwenden.

Zur Herstellung des Karosseriebauteils wird auch ein erfindungsgemäßes Verfahren vorgeschlagen, nämlich zunächst einen die Kontur des Karosseriebauteils bestimmenden Grundkörper in einer Gußform herzustellen, der nach Entnahme aus der Gußform von einem Kunststoff oder einem Verbundwerkstoff ummantelt wird, wobei anschließend an der im wesentlichen ebenen Manteloberfläche eine Karosserieaußenhaut angebracht wird. Auf diese Weise kann das erfindungsgemäße Karosseriebauteil schnell und kostengünstig hergestellt werden.

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Patentansprüchen. Die einzelnen Merkmale können je einzeln für sich oder zu mehreren in beliebiger Kombination bei einer Ausführungsform der Erfindung verwirklicht sein.

**Es zeigt:**
- **Fig. 1**: eine dreidimensionale Darstellung eines Karosseriebauteils;
- **Fig. 2**: eine Detailzeichnung des inneren Aufbaus des Karosseriebauteils nach Fig. 1.

Die Erfindung ist in den Figuren schematisch dargestellt, so daß die wesentlichen Merkmale der Erfindung gut zu erkennen sind. Die Darstellungen sind nicht notwendigerweise maßstäblich zu verstehen.

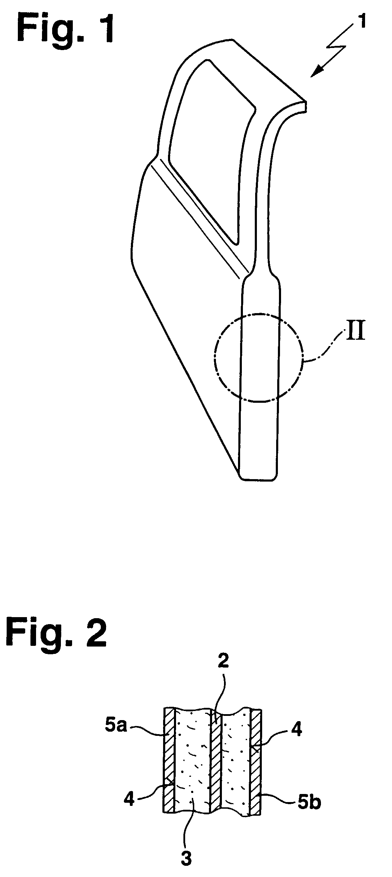

Aus der **Fig. 1** ist ersichtlich, daß es sich bei dem Karosseriebauteil 1 um eine Fahrzeugtür der Karosserie eines Kraftfahrzeugs handelt. Der erfindungsgemäße Schichtaufbau des Karosseriebauteils 1 aus einem Grundkörper, einer Ummantelung des Grundkörpers aus einem Kunststoff oder Verbundwerkstoff und der auf der Ummantelung angebrachten Karosserieaußenhaut ist in der Fig. 1 nicht dargestellt.

**Fig. 2** zeigt einen Teilbereich des Karosseriebauteils 1 in einer Schnittdarstellung. Ein formstabiler, die Kontur des Karosseriebauteils 1 (siehe Fig. 1) bestimmender Grundkörper 2 ist von einer Ummantelung 3 vollständig umgeben. Der eingebettete Grundkörper 2 kann aus Kunststoff, einem Verbundwerkstoff oder einem Leichtmetall hergestellt werden und bildet einen Kern des Karosseriebauteils, an dem spätere Komponenten oder Anbauteile der Karosserie befestigt werden können. Eine Ummantelung 3 aus einem schaumfähigen Werkstoff umkleidet den komplexen Grundkörper 2 und füllt dessen Ausnehmungen vollständig aus. Unerwünschte Ecken, Kanten, Spritz- oder Gußnasen des gefertigten Grundkörpers 2 (Rohling) können durch die Ummantelung 3 abgedeckt und ausgeglichen werden. Der Grundkörper 2 bedarf nicht unbedingt einer Nachbehandlung. Die Ummantelung 3 dient beispielsweise der Polsterung des lnnenbereichs der Karosserie oder auch der Geräuschdämmung. Die Ummantelung 3 weist eine ebene Manteloberfläche 4 (Unterhaut) auf, die glatte Flächen bereitstellt, um eine Außenhaut 5a, 5b an der Ummantelung 3 anzubringen. Die dünnwandige Außenhaut 5a, 5b ist als Folie ausgebildet und auf die Manteloberfläche 4 aufgeklebt. Die dem Innenbereich der Karosserie zugeordnete Außenhaut 5b ist möglichst weich ausgebildet, während die dem Karosserieaußenbereich zugeordnete Außenhaut 5a eine harte Oberfläche bildet. Der Schichtaufbau gemäß Fig. 2 ermöglicht die kostengünstige Herstellung des Karosseriebauteils mit einer hohen Steifigkeit. Durch Verwendung entsprechender Schichtmaterialien für den Grundkörper 2, die Ummantelung 3 und die Außenhäute 5a und 5b kann ein Karosseriebauteil auf einen unterschiedlichen Karosseriebereich abgestimmt werden.

### BEZUGSZEICHENLISTE

- 1: Karosseriebauteil
- 2: Grundkörper
- 3: Ummantelung
- 4: Manteloberfläche
- 5a: Außenhaut
- 5b: Außenhaut

## Patentansprüche

1. Karosseriebauteil (1) mit einem formstabilen, im wesentlichen die Kontur des Karosseriebauteils (1) bestimmenden Grundkörper (2) , **dadurch gekennzeichnet**, daß eine den Grundkörper (2) umgebende Ummantelung (3) aus einem Kunststoff oder einem Verbundwerkstoff vorgesehen ist, die eine dem Grundkörper (2) abgewandte, im wesentlichen ebene Manteloberfläche (4) aufweist, an der eine Karoserrieaußenhaut (5a, 5b) angebracht ist.

2. Karosseriebauteil nach Anspruch 1, dadurch gekennzeichnet, daß die Ummantelung (3) aus einem geschäumten Kunststoff besteht.

3. Karosseriebauteil nach Anspruch 2, dadurch gekennzeichnet, daß die Ummantelung (3) aus einem metallischen Schaumwerkstoff herstellbar ist.

4. Karosseriebauteil nach Anspruch 2, dadurch gekennzeichnet, daß die Ummantelung (3) aus Polyethylen herstellbar ist.

5. Karosseriebauteil nach einem der vorhergehenden Ansprüche, dadurch gekennzeichnet, daß in der Ummantelung (3) Kabelkanäle vorgesehen sind.

6. Karosseriebauteil nach einem der vorhergehenden Ansprüche, dadurch gekennzeichnet, daß in die Ummantelung (3) Halterungen für kleinere Bauteile eingebettet sind.

7. Karosseriebauteil nach einem der vorhergehenden Ansprüche, dadurch gekennzeichnet, daß die Karosserieaußenhaut (5a, 5b) durch eine Folie aus Kunststoff oder Metall ausgebildet ist.

8. Karosseriebauteil nach einem der vorhergehenden Ansprüche, dadurch gekennzeichnet, daß die Karosserieaußenhaut (5a, 5b) auf die Manteloberfläche (4) aufklebbar ist.

9. Karosseriebauteil nach einem der vorhergehenden Ansprüche, dadurch gekennzeichnet, daß die Karosserieaußenhaut (5a, 5b) mit Hilfe eines oder mehrerer Befestigungsmittel mit dem Grundkörper (2) fest verbindbar ist.

10. Karosseriebauteil nach einem der vorhergehenden Ansprüche, dadurch gekennzeichnet, daß mindestens ein Karosserieanbauteil an dem Karosseriebauteil (1) befestigbar ist, indem das mindestens eine weitere Karosserieanbauteil mit Hilfe eines oder mehrerer Befestigungsmittel mit dem Grundkörper (2) fest verbindbar ist.

11. Karosseriebauteil nach Anspruch 9 oder 10, dadurch gekennzeichnet, daß das Befestigungsmittel durch eine selbstschneidende Befestigungsschraube ausgebildet ist.

12. Karosseriebauteil nach Anspruch 9 oder 10, dadurch gekennzeichnet, daß das Befestigungsmittel durch einen Stanzniet ausgebildet ist.

13. Verfahren zur Herstellung eines Karosseriebauteils nach einem der vorhergehenden Ansprüche, dadurch gekennzeichnet, daß zunächst ein die Kontur des Karosseriebauteils (1) bestimmender Grundkörper (2) in einer Gußform hergestellt wird, der nach Entnahme aus der Gußform ummantelt wird, und daß an der im wesentlichen ebenen Manteloberfläche (4) eine Karosserieaußenhaut (5a, 5b) angebracht wird.
